Europäisches Patentamt

(19) European Patent Office

Office européen des brevets

(11) Publication number: **0 115 882**
**B1**

(12) **EUROPEAN PATENT SPECIFICATION**

(45) Date of publication of patent specification: **10.12.86**

(21) Application number: **84200012.7**

(22) Date of filing: **09.01.84**

(51) Int. Cl.⁴: **E 02 F 5/10, F 16 L 1/02**

(54) Machine for laying a flexible tube or cable into the ground.

(30) Priority: **07.01.83 NL 8300052**

(43) Date of publication of application:
**15.08.84 Bulletin 84/33**

(45) Publication of the grant of the patent:
**10.12.86 Bulletin 86/50**

(84) Designated Contracting States:
**DE FR GB IT NL SE**

(56) References cited:
**DE-A-1 634 033**
**FR-A-2 387 322**

(73) Proprietor: **DIGGING TRADING COMPANY, N.V.**
**Rijksstraatweg 100 P.O. Box 7011**
**NL-3286 ZG Klaaswaal (NL)**

(72) Inventor: **Hofman, Arie Anthonie**
**Schaapsdrift 30**
**NL-6871 XB Renkum (NL)**

(74) Representative: **van der Beek, George Frans**
**et al**
**Nederlandsch Octrooibureau Johan de Wittlaan**
**15 P.O. Box 29720**
**NL-2502 LS 's-Gravenhage (NL)**

## Description

The invention relates to a machine for laying a flexible tube or cable in the ground comprising an endless-track vehicle and a trenching plough with a grubbing foot connected to said vehicle by a linkage system, said linkage system including a lower lifting frame and an upper level luffing frame both being hinged to the vehicle as well as the trenching plough construction, at least one lifting cylinder for pivoting the linkage system with trenching plough upwards and downwards, a depth control mechanism for maintaining the depth of the trenching plough, and a guiding member for guiding the tube or cable into the ground, the main direction of the lifting frame and of the level luffing frame intersecting each other in an imaginary point lying beyond the center of the supporting part of the track in the direction of the front side of the vehicle. Usually, the length of the supporting parts of the tracks is substantially equal to the distance between the axes of the front and the rear guide wheels.

The suspension of the trenching plough by a lifting frame and a level luffing frame both having separate hinge connections with the trench plough construction as well as with the vehicle, is advantageous in that the suspension has a simple construction, especially compared with known machine, of which the trenching plough is suspended by two quadrangles. The position of the trenching plough in the ground should be as much as possible independent on the vehicle riding over unevennesses of the surface. It would be ideal if the trenching plough in moving the vehicle would float more or less, that is to say that the weight of the trenching plough, the action force caused by the movement and the contact pressure exerted as a reaction by the ground on the beak of the trenching plough would be in balance with each other.

Both machines mentioned above do not meet always this ideal situation; in moving the vehicle the trenching plough is liable to move upwards or downwards. To correct this the engineer sets such a pressure in the lifting cylinders that the trenching plough remains floating at a certain level. This correction pressure differs dependent on the type of soil and the depth of the trenching plough. It takes time and requires skill to adjust the correction pressure in the lifting cylinders. In addition a separate control circuit is necessary to this correction.

It is an object of the invention to avoid the abovementioned objections and to give the suspension of the trenching plough such a construction that the trenching plough can float with a small positive contact pressure without adjusting a correction pressure in the lifting cylinders.

According to the invention the machine indicated in the preamble is characterized in that the connecting line between said imaginary point of intersection of lifting frame and level luffing frame and the center of the supporting beak length of the trenching plough intersects the supporting part of the track at a point lying in a range extending from the center of the supporting part of the track to one quarter of the length of that part in the direction of the trenching plough.

If the vehicle rides over an unevennesses of the surface, as a consequence of the special suspension of the trenching plough, this plough will be liable to follow these deviations with respect to a straight line on a stongly reduced scale, whereby the depth control mechanism has such a correcting influence that the trenching plough indeed follows a substantially straight line.

Preferably, said range extends from a point lying at a distance from one twentieth of the supporting track part from the middle thereof to a point lying at a distance of four twentieths of the supporting track part from said center.

It is noted that the grubbing foot of the trenching plough can have any shape, such as flat, hexagonal, cylindrical, V-shaped and such like.

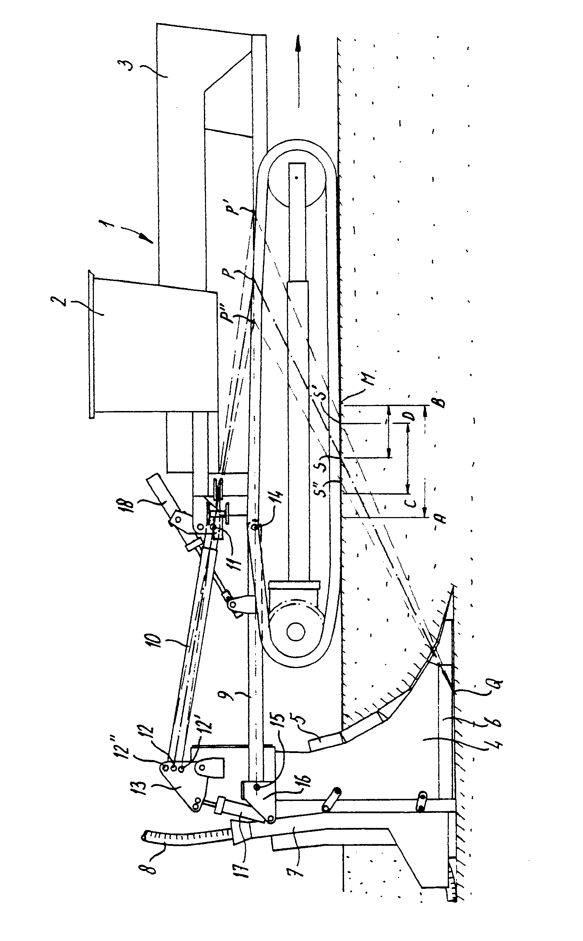

The invention will now be elucidated with the aid of the figure showing a schematical side view of the machine according to the invention.

The shown machine is meant to lay a flexible filter tube or cable in the ground, e.g. at a depth between one and two meters.

The machine includes an endless-track vehicle 1 with an engineer's cab 2 and a motor housing 3, and a non-positively driven trenching plough 4 with knife-shaped wear strips 5 and a grubbing foot 6 of any cross-section. A guiding sleeve 7 is secured to the trenching plough, said sleeve being meant to guide a flexible drain pipe 8 (or cable) in the trench dug by the trenching plough in the ground.

The suspension mechanism of the trenching plough 4 includes a lifting frame 9 and a level luffing frame or rod 10.

At 11 the level luffing frame 10 is hinged to the vehicle and at 12 hinged to a tumbler 13. The lifting frame 9 has a hinge connection 14 to the vehicle and at its other end 15 a hinge connection to a holder 16 for the trenching plough 4. On its turn the tumbler 13 is hinged to the holder 16.

Two depth control cylinders 17 are mounted between the holder 16 and the tumbler 13, said cylinders being controlled by a non-shown depth control mechanism known per se and usually provided with a laser beam unit in the field and a laser beam receiver on the vehicle, said receiver controlling the cylinder 17 such that in case of an upwards riding vehicle the trenching plough moves downwards and reverse. As a matter of fact the trenching plough 4 can be mounted in several vertical positions in the holder 16.

Further the hinge point 12 can be brought downwards or upwards somewhat. Therefore the tumbler 13 is provided with several holes corresponding with hinge points 12' and 12''.

To move the entire construction consisting of lifting frame 9, level luffing frame 10, trenching plough holder 16, trenching plough 4 and guiding sleeve 7 upwards or downwards, two lifting cylinders 18 are pivotally mounted between the lifting frame 9 and the vehicle 1.

The main directions of the lifting frame 9 and the level luffing frame 10 intersect each other in the imaginary point P. The center of the supporting length of the beak of the trenching plough 4 is indicated at point Q. The connecting line between P and Q intersects the supporting part of the track at point S. According to the invention point S lies in the range AB extending from the centre M of the supporting part of the track in the direction of the trenching plough along a length amounting to maximally one quarter of the length of that supporting part of the track. Preferably, S lies in a range CD extending along a length between one twentieth of the length of the supporting part and four twentieths of that length from the center M of the supporting part.

In the case where the end of the level luffing frame is secured to the tumbler 13 at 12' or 12'' respectively, the imaginary intersecting point of the main direction of lifting frame and level luffing frame lie at P' and P'' respectively and the intersecting point of lines P'Q, P''Q respectively with the supporting part of the track will lie at S', S'' respectively.

By selecting point S (S', S'') in the abovementioned range it is achieved that if the lifting cylinders 18 are not under pressure, the trenching plough will maintain its depth and will only be under the influence of the depth control cylinder 17 when the vehicle moves in the direction of the arrow. In other words without the application of correction pressure in the lifting cylinders 18 the trenching plough is not liable to move upwards or downwards but keeps floating at its depth. This means for the engineer a considerable simplification of the operation. Another advantage is that the pressure exerted by the tracks on the ground remains equal along the entire length of the tracks which is especially important in case of hard going soil.

Several modifications are possible within the scope of the claims.

## Claims

1. Machine for laying a flexible tube or cable in the ground comprising an endless-track vehicle, a trenching plough (4) with grubbing foot (6) connected with said vehicle by a linkage system, said linkage system consisting of a lower lifting frame (9) and an upper level luffing frame (10), both frames being hinged to the vehicle as well as to the trenching plough construction, at least one lifting cylinder (18) for pivoting the linkage system with trenching plough upwards and downwards, a depth control mechanism (17) for maintaining the depth of the trenching plough, and a guide member (7) for guiding the tube or cable into the ground, the main direction of the lifting frame (9) and that of the level luffing frame (10) intersecting each other in an imaginary point (P) lying beyond the middle (M) of the supporting part of the track in the direction of the front side of the vehicle, characterized in that the connecting line between said imaginary intersecting point (P) of the lifting frame (9) and level luffing frame (10) and the middle (Q) of the supporting beak length of the trenching plough (4) intersects the supporting part of the track at a point (S) lying in a range (AB) extending from the centre (M) of the supporting part of the track to one quarter of the length of that part in the direction of the trenching plough (4).

2. Machine according to claim 1, characterized in that said range extends from a point (D) lying at a distance of one twentieth of the supporting part of the track from the centre (M) thereof to a point (C) lying at a distance of four twentieths of the supporting track part from said centre (M).

## Patentansprüche

1. Maschine zum Verlegen eines flexiblen Rohrs oder Kabels in den Boden, bestehend aus einem Endlosraupenfahrzeug, einem Grabenpflug (4) mit einem Grabefuß (6), der mit dem genannten Fahrzeug durch ein Verbindungssystem verbunden ist, welches aus einem unteren Hubrahmen (9) und einem oberen Wippdrehrahmen (10) besteht, die beide sowohl an dem Fahrzeug als auch an der Grabenpflugkonstruktion befestigt sind, mindestens einem Hubzylinder (18) zum drehbaren Lagern des Verbindungssystems mit den Auf- und Abbewegungen des Grabenpflugs, einem Tiefenkontrollmechanismus (17) zur Aufrechterhaltung der Tiefe des Grabenpflugs, und einem Führungsteil (7) zur Führung des Rohres oder Kabels in den Boden, wobei die Hauptrichtung des Hubrahmens (9) und diejenige des Wippdrehrahmens (10) einander in einem imaginären Punkt (P) schneiden, der über die Mitte (M) des Trägerteils der Raupe hinaus in Richtung der Vorderseite des Fahrzeugs liegt, dadurch gekennzeichnet, daß die Verbindungslinie zwischen dem genannten imaginären Schnittpunkt (P) des Hubrahmens (9) und des Wippdrehrahmens (10) und der M)pdrehrahmens (10) und der Mitte (Q) der Halteschnabellänge des Grabenpflugs (4) den Trägerteil der Raupe in einem Punkt (S) schneidet, der innerhalb eines Bereichs (A, B) liegt, der sich von dem Zentrum (M) des Trägerteils der Raupe bis zu einem Viertel der Länge dieses Teils in Richtung des Grabenpflugs (4) erstreckt.

2. Maschine nach Anspruch 1, dadurch gekennzeichnet, daß der Bereich sich von einem Punkt (D), der in einem Abstand von einem Zwanzigstel des Halteteils der Raupe von dem Zentrum (M) liegt, bis zu einem Punkt (C) erstreckt, der in einem Abstand von vier Zwanzigstel des Trägerteils der Raupe von dem genannten Zentrum (M) liegt.

## Revendications

1. Machine pour poser dans le sol un tuyau ou câble flexible, machine qui comprend un véhicule chenillé, une charrue à creuser des tranchées (4) munie d'un patin fouilleur (6) et raccordée à ce véhicule par un système de liaison, ce système de liaison étant composé d'un bâti élévateur inférieur (9) et d'un bâti supérieur de gouverne de niveau (10), les deux bâtis étant articulés au véhicule ainsi qu'à la structure de la charrue à creuser des tranchées, au moins un cylindre élévateur (18) destiné à faire pivoter vers le haut et vers le bas le système de liaison avec la charrue à creuser des tranchées, un mécanisme de commande de profondeur (17) destiné à maintenir la profondeur de la charrue à creuser des tranchées, et un organe de guidage (7) destiné à guider dans le sol le tuyau ou le câble, la direction principale du bâti élévateur (9) et celle du bâti de gouverne de niveau (10) se coupant l'une l'autre en un point imaginaire (P) se trouvant au-délà du milieu (M) de la partie portante de la chenille dans la direction du côté avant du véhicule, caractérisée en ce que la ligne qui raccorde le point d'intersection imaginaire (P) du bâti élévateur (9) et du bâti de gouverne de niveau (10) avec le milieu (Q) de la longueur portante du bec de la charrue à creuser des tranchées (4) coupe la partie portante de la chenille en un point (S) qui se trouve dans un intervalle (AB) qui s'étend du centre (M) de la partie portante de la chenille jusqu'à un quart de la longueur de cette partie, dans la direction de la charrue à creuser des tranchées (4).

2. Machine conforme à la revendication 1, caractérisée en ce que cet intervalle s'étend à partir d'un point (D) qui se trouve à une distance d'un vingtième de la partie portante de la chenille à partir du centre (M) de cette dernière, jusqu'à un point (C) qui se trouve à une distance de quatre vingtièmes de la partie portante de la chenille, à partir de ce centre (M).

0 115 882